(19) Europäisches Patentamt / European Patent Office / Office européen des brevets

(11) **EP 2 505 605 B1**

(12) **EUROPEAN PATENT SPECIFICATION**

(45) Date of publication and mention
of the grant of the patent:
**10.06.2015 Bulletin 2015/24**

(51) Int Cl.:
***C08L 23/00*** *(2006.01)*    ***C08F 20/16*** *(2006.01)*
***C08L 33/10*** *(2006.01)*

(21) Application number: **10833228.9**

(86) International application number:
**PCT/JP2010/070936**

(22) Date of filing: **24.11.2010**

(87) International publication number:
**WO 2011/065382 (03.06.2011 Gazette 2011/22)**

(54) **PROCESSING AID FOR POLYOLEFIN RESINS, POLYOLEFIN RESIN COMPOSITIONS, AND MOLDED PRODUCTS**

VERARBEITUNGSHILFSSTOFF FÜR POLYOLEFINHARZE, POLYOLEFINHARZZUSAMMENSETZUNGEN UND FORMPRODUKTE

ADDITIF POUR RÉSINES DE POLYOLÉFINE, COMPOSITIONS DE RÉSINES DE POLYOLÉFINE ET ARTICLES MOULÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2009   JP 2009268539**
**18.10.2010   JP 2010233387**

(43) Date of publication of application:
**03.10.2012   Bulletin 2012/40**

(73) Proprietor: **Mitsubishi Rayon Co., Ltd.**
**Tokyo 100-8253 (JP)**

(72) Inventors:
• **HIRAI, Shinya**
**Otake-shi**
**Hiroshima 739-0693 (JP)**
• **HATAE, Youko**
**Otake-shi**
**Hiroshima 739-0693 (JP)**

• **KIURA, Masaaki**
**Otake-shi**
**Hiroshima 739-0693 (JP)**
• **KASAI, Toshihiro**
**Otake-shi**
**Hiroshima 739-0693 (JP)**

(74) Representative: **Ter Meer Steinmeister & Partner Patentanwälte mbB**
**Mauerkircherstrasse 45**
**81679 München (DE)**

(56) References cited:
**EP-A1- 2 206 743         WO-A1-2006/112192**
**WO-A1-2009/060936   JP-A- 1 247 409**
**JP-A- 6 057 151           JP-A- 2000 159 923**
**JP-A- 2000 319 516     JP-A- 2001 031 826**
**JP-A- 2003 020 376     JP-A- 2008 037 955**

**Description**

TECHNICAL FIELD

The present invention relates to the use of an alkyl methacrylate-based polymer as a processing aid for a polyolefin-based resin, a polyolefin-based resin composition containing the processing aid for a polyolefin-based resin, and a molded article obtainable by molding the polyolefin-based resin composition.

BACKGROUND ART

Polyolefin-based resin is lightweight, excellent in physical properties such as rigidity, heat resistance and chemical resistance, and excellent in recycling properties and therefore, is being widely used for various applications. In particular, because of excellent mechanical and chemical characteristics, the polyolefin-based resin has a wide field of applications such as automobile member, home appliance member, medical member, building member and packaging material.

However, its mold processability is not satisfied and for improving the mold processability, various methods have been proposed. For example, in order to improve mold processability of the polyolefin-based resin, a method of raising the melt tension by increasing the molecular weight of the polyolefin-based resin has been proposed, but the increase in the molecular weight incurs reduction in the fluidity that is one of the indexes indicative of mold processability, and there is a problem that it is impossible to satisfy both excellent melt tension and excellent fluidity.

As a method for solving such a problem, Patent Document 1 has proposed a method of blending an alkyl methacrylate-based polymer having a mass average molecular weight of 150,000 to 20,000,000 to the polyolefin-based resin.

Also, Patent Document 2 has proposed a method of adding an alkyl (meth)acrylate polymer having a long-chain alkyl group to the polyolefin-based resin.

WO 2009/060936 relates to a powdery processing aid for polyolefin-based resins which contains an alkyl methacrylate-based polymer comprising an alkyl methacrylate unit, wherein an alkyl group has from 2 to 6 carbon atoms, as the major component and having a mass-average molecular weight of 150,000 to 20,000,000; and a polyolefin-based resin composition which comprises the powdery processing aid for polyolefin-based resins and a polyolefin-based resin.

JP 1-247409 A relates to a processing aid for a thermoplastic resin, which is obtained by polymerizing a monomer or monomer mixture composed mainly of methyl methacrylate in the presence of a polymer composed mainly of a methacrylic acid ester other than methyl methacrylate.

In the methods proposed in Patent Documents 1 and 2, the melt tension and fluidity of the polyolefin-based resin are improved as compared with conventional methods, but higher melt tension and fluidity performances required are not sufficiently satisfied.

RELATED ART

PATENT DOCUMENT

Patent Document 1: International Publication No. 2009/060936, pamphlet
Patent Document 2: Japanese Unexamined Patent Publication (Kokai) No. 11-100479

SUMMARY OF THE INVENTION

PROBLEMS TO BE SOLVED BY THE INVENTION

An object of the present invention is to provide a processing aid for a polyolefin-based resin, capable of providing a polyolefin-based resin composition having excellent mold processability, i.e., excellent in melt tension, fluidity and die build-up inhibiting effect.

MEANS TO SOLVE THE PROBLEMS

The present invention provides the use of (A) an alkyl methacrylate-based polymer containing, as a main component, a unit of (a1) an alkyl methacrylate in which the alkyl group has a carbon number of 2 to 10, and having a mass average molecular weight of 15,000 to 145,000 measured by gel permeation chromatography, wherein in the alkyl methacrylate-based polymer (A), per 100 mass% of all monomer units, the content of the unit of (a1) an alkyl methacrylate with the alkyl group having a carbon number of 2 to 10 is 50 mass% or more, as a processing aid for a polyolefin-based resin.

Also, the present invention provides a polyolefin-based resin comprising the processing aid for a polyolefin-based resin and (B) a polyolefin-based resin.

Furthermore, the present invention provides a molded article obtainable by molding the polyolefin-based resin composition.

EFFECTS OF THE INVENTION

The processing aid for a polyolefin-based resin of the present invention is excellent in the powder handleability and when blended with (B) a polyolefin-based resin, gives a polyolefin-based resin composition having excellent mold processability, i.e., excellent in melt tension, fluidity and die build-up inhibiting effect.

BRIEF DESCRIPTION OF THE DRAWINGS

[Fig. 1] Showing a cross-sectional view of a heterogeneous die used in Examples 22 and 23 and Comparative Examples 24 to 27.

[Fig. 2] Showing a relationship between mass average molecular weight and MFR in Examples 8 to 10 and Comparative Examples 10 to 12.

[Fig. 3] Showing a relationship between mass average molecular weight and melt tension in Examples 8 to 10 and Comparative Examples 10 to 12.

MODE FOR CARRYING OUT THE INVENTION

In the alkyl methacrylate-based polymer (A) for use in the present invention, a unit of (a1) an alkyl methacrylate with the alkyl group having a carbon number of 2 to 10 is a main component.

In the alkyl methacrylate-based polymer (A), per 100 mass% of all monomer units, the content of the unit of (a1) an alkyl methacrylate with the alkyl group having a carbon number of 2 to 10 is 50 mass% or more, the content of the unit of (a1) is preferably 70 mass% or more, and the content of the unit of (a1) is more preferably 80 mass% or more.

When the content of the unit of (a1) an alkyl methacrylate with the alkyl group having a carbon number of 2 to 10 is 50 mass% or more, the obtained polyolefin-based resin composition is improved in the dispersibility of the processing aid for a polyolefin-based resin in the polyolefin-based resin (B) and is excellent in the melt tension.

The alkyl methacrylate-based polymer (A) for use in the present invention is obtainable by polymerizing (a) a monomer component containing, as a main component, (a1) an alkyl methacrylate with the alkyl group having 2 to 10 carbon atoms.

Examples of the (a1) alkyl methacrylate with the alkyl group having a carbon number of 2 to 10 include ethyl methacrylate, n-propyl methacrylate, i-propyl methacrylate, n-butyl methacrylate, i-butyl methacrylate, sec-butyl methacrylate, tert-butyl methacrylate, 2-methylbutyl methacrylate, 3-methylbutyl methacrylate, 3-pentyl methacrylate, n-hexyl methacrylate, cyclohexyl methacrylate, 2-ethylhexyl methacrylate, n-octyl methacrylate, decyl methacrylate, and tert-butylcyclohexyl methacrylate. One of these may be used alone, or two or more thereof may be used in combination.

Among these, an alkyl methacrylate with the alkyl group having a carbon number of 2 to 6 is preferred because the obtained processing aid for a polyolefin-based resin is excellent in the powder handleability; an alkyl methacrylate with the alkyl group having a carbon number of 4 is more preferred because the obtained polyolefin-based resin composition is improved in the dispersibility of the processing aid for a polyolefin-based resin in the polyolefin-based resin (B) and is excellent in the melt tension; and i-butyl methacrylate is still more preferred because the effect of improving the melt tension and fluidity of the obtained polyolefin-based resin composition is excellent.

As the monomer component (a), (a2) other copolymerizable monomers may be contained, if desired, in addition to the (a1) alkyl methacrylate with the alkyl group having a carbon number of 2 to 10.

Examples of other monomers (a2) include methyl methacrylate; an alkyl methacrylate with the alkyl group having a carbon number of 10 or more, such as lauryl methacrylate; a (meth)acrylic acid; an aromatic vinyl monomer such as styrene, $\alpha$-methylstyrene and chlorostyrene; an alkyl acrylate such as methyl acrylate, ethyl acrylate and butyl acrylate; a vinyl cyanide monomer such as (meth)acrylonitrile; a vinyl ether monomer such as vinyl methyl ether and vinyl ethyl ether; a vinyl carboxylate monomer such as vinyl acetate and vinyl butyrate; an olefin-based monomer such as ethylene, propylene and isobutylene; a diene-based monomer such as butadiene, isoprene and dimethylbutadiene; and a light stabilizing group-containing monomer such as 4-(meth)acryloyloxy-2,2,6,6-tetramethylpiperidine and 4-(meth)acryloylamino-2,2,6,6-tetramethylpiperidine. One of these may be used alone, or two or more thereof may be used in combination.

Among these, an alkyl acrylate is preferred, because its copolymerizability with the alkyl methacrylate in which the alkyl group has a carbon number of 2 to 10 is good and thermal decomposition of the alkyl methacrylate-based polymer (A) is suppressed.

Incidentally, the term "(meth)acryl" as used in the description of the present invention indicates "acryl" or "methacryl".

As for the compositional ratio of the monomer component (a), the content of the (a1) alkyl methacrylate with the alkyl group having a carbon number of 2 to 10 is 50 mass% or more and the content of other monomers (a2) is 50 mass% or less; preferably, the content of (a1) is 70 mass% or more and the content of (a2) is 30 mass% or less; more preferably, the content of (a1) is 80 mass% or more and the content of (a2) is 20 mass% or less, per 100 mass% of the monomer component (a).

When the content of the (a1) alkyl methacrylate with the alkyl group having a carbon number of 2 to 10 is 50 mass% or more, the obtained polyolefin-based resin composition is improved in the dispersibility of the processing aid for a polyolefin-based resin in the polyolefin-based resin (B) and is excellent in the melt tension.

When the content of other monomers (a2) is 50 mass% or less, the obtained polyolefin-based resin composition is improved in the dispersibility of the processing aid for a polyolefin-based resin in the polyolefin-based resin (B) and is excellent in the melt tension.

Examples of the polymerization method of the monomer component (a) include radical polymerization and ionic polymerization.

Among these, radical polymerization is preferred because of good productivity.

Examples of the polymerization form of the monomer component (a) include emulsion polymerization, soap-free polymerization, fine suspension polymerization, suspension polymerization, bulk polymerization, and solution polymerization.

Among these, emulsion polymerization and suspension polymerization are preferred, because the alkyl methacrylate-based polymer (A) is obtainable in the powder or granule form.

Examples of the emulsifier used when polymerizing the monomer component (a) by emulsion polymerization include an anionic emulsifier, a nonionic emulsifier, a high-molecular emulsifier, and a reactive emulsifier having a radical polymerizable unsaturated double bond within the molecule. One of these may be used alone, or two or more thereof may be used in combination.

Among these, an anionic emulsifier such as sulfonic acid-based salt compound, sulfuric acid-based salt compound and phosphoric acid ester-based salt compound is preferred.

Examples of the dispersion stabilizer used when polymerizing the monomer component (a) by suspension polymerization include a sparingly water-soluble inorganic compound such as calcium phosphate, calcium carbonate, aluminum hydroxide, precipitated silica powder; a nonionic high-molecular compound such as polyvinyl alcohol, polyethylene oxide and cellulose derivative; and an anionic high-molecular compound such as poly(meth)acrylic acid or its salt and a copolymer of methacrylic acid ester, methacrylic acid and its salt. One of these may be used alone, or two or more thereof may be used in combination.

Among these, an anionic high-molecular compound is preferred, because dispersion stability can be maintained with a very small amount.

Examples of the polymerization initiator for use in the polymerization of the monomer component (a) include a persulfate-based compound such as potassium persulfate sodium persulfate and ammonium persulfate; an oil-soluble azo-based compound such as azobisisobutyronitrile, 2,2'-azobis(2-methylbutyronitrile), 2,2'-azobis(2,4-dimethylvaleronitrile), 2,2'-azobis(4-methoxy-2,4-dimethylvaleronitrile) and 2-phenylazo-4-methoxy-2,4-dimethylvaleronitrile; a water-soluble azo-based compound such as 2,2'-azobis{2-methyl-N-[1,1-bis(hydroxymethyl)-2-hydroxyethyl]propionamide}, 2,2'-azobis{2-methyl-N-[2-(1-hydroxyethyl)]propionamide}, 2,2'-azobis{2-methyl-N-[2-(1-hydroxybutyl)]propionamide}, 2,2'-azobis[2-(5-methyl-2-imidazolin-2-yl)propane] or its salts, 2,2'-azobis[2-(2-imidazolin-2-yl)propane] or its salts, 2,2'-azobis[2-(3,4,5,6-tetrahydropyrimidin-2-yl)propane] or its salts, 2,2'-azobis{2-[1-(2-hydroxyethyl)-2-imidazolin-2-yl]propane} or its salts, 2,2'-azobis(2-methylpropionamidine) or its salts, 2,2'-azobis(2-methylpropinamidine) or its salts, and 2,2'-azobis[N-(2-carboxyethyl)-2-methylpropionamidine] or its salts; an organic peroxide such as tert-butyl hydroperoxide, cumene hydroperoxide and benzoyl peroxide; and a redox initiator obtainable by combining the above-described persulfate-based compound or organic peroxide and a reducing agent. One of these may be used alone, or two or more thereof may be used in combination.

The alkyl methacrylate-based polymer (A) polymerized by various polymerization methods may be taken out as a powder or a granule from the system by a method suitable for each polymerization method.

In the case of polymerizing the alkyl methacrylate-based polymer (A) by emulsion polymerization, examples of the method for taking out the polymer (A) from the latex of the polymer (A) include a coagulation method, a spray-drying method, a centrifugation method and a freeze-drying method.

Among these, a coagulation method and a spray-drying method are preferred, because the obtained alkyl methacrylate-based polymer (A) provides powder having improved uniformity.

The coagulation method includes, for example, a method where an alkyl methacrylate-based polymer (A) latex is contacted with a coagulant, coagulated by stirring to make a slurry and then dehydration-dried to obtain a powder of the alkyl methacrylate-based polymer (A).

Examples of the coagulant include inorganic acids such as hydrochloric acid, sulfuric acid, nitric acid and phosphoric acid; organic acids such as formic acid and acetic acid; inorganic salts such as aluminum sulfate, magnesium sulfate and calcium sulfate; and organic salts such as calcium acetate.

The spray-drying method includes, for example, a method where an alkyl methacrylate-based polymer (A) latex is spray-dried by a spray dryer under the conditions of an inlet temperature of 120 to 220°C and an outlet temperature of 40 to 90°C to obtain a powder of the alkyl methacrylate-based polymer (A).

In the spray-drying method, the outlet temperature is preferably from 40 to 90°C in view of excellent disintegrability of the alkyl methacrylate-based polymer (A) powder into a primary particle, and more preferably from 40 to 80°C.

In the case of polymerizing the alkyl methacrylate-based polymer (A) by suspension polymerization, a method of collecting the polymer (A) by filtration is simple and easy.

The mass average molecular weight of the alkyl methacrylate-based polymer (A) for use in the present invention is from 15,000 to 145,000, preferably from 20,000 to 130,000, more preferably from 25,000 to 100,000.

When the mass average molecular weight of the alkyl methacrylate-based polymer (A) is 15,000 or more, the obtained processing aid for a polyolefin-based resin is excellent in the effect of enhancing the melt tension. Also, when the mass average molecular weight of the alkyl methacrylate-based polymer (A) is 145,000 or less, the obtained polyolefin-based resin composition is excellent in fluidity.

Incidentally, in the present invention, the mass average molecular weight is measured using gel permeation chromatography.

The method for adjusting the mass average molecular weight includes, for example, a method of adjusting the amount of the polymerization initiator, and a method of adjusting the amount of the chain transfer agent.

Examples the chain transfer agent include mercaptans such as n-dodecyl mercaptan, tert-dodecyl mercaptan, n-octyl mercaptan, n-tetradecyl mercaptan and n-hexyl mercaptan; halides such as carbon tetrachloride and ethylene bromide; and an $\alpha$-methylstyrene dimer. One of these may be used alone, or two or more thereof may be used in combination.

The amount of the chain transfer agent used may be appropriately adjusted according to the mass average molecular weight of the alkyl methacrylate-based polymer (A), the kind of the chain transfer agent used, and the constituent ratio of the monomer component (a).

As for the alkyl methacrylate-based polymer (A) of the present invention, the same polymer may be used alone, or two or more kinds of polymers differing in composition, molecular weight, or particle diameter may be used in combination.

The processing aid for a polyolefin-based resin of the present invention contains the alkyl methacrylate-based polymer (A) of the present invention.

In the processing aid for a polyolefin-based resin, as long as the original characteristics of the polyolefin-based resin (B) are not impaired, various additives such as filler, flame retardant, stabilizer, lubricant and foaming agent may be further blended, in addition to the alkyl acrylate-based polymer (A).

As the additive, the same as those exemplified as the additive blended with the later-described polyolefin-based resin composition may be used.

The polyolefin-based resin (B) for use in the present invention contains, as a main component, for example, a homopolymer or copolymer of an olefin-based monomer, a copolymer of a major amount of an olefin-based monomer and a minor amount of a vinyl monomer, or a copolymer of an olefin-based monomer and a diene-based monomer.

Examples of the olefin-based monomer include ethylene, propylene, 1-butene, 1-hexene, 1-octene and 1-decene.

Among these, in view of versatility of the molded body obtained, ethylene and propylene are preferred.

Examples of the polyolefin-based resin (B) include a low-density polyethylene, an ultralow-density polyethylene, a super-ultralow-density polyethylene, a linear low-density polyethylene, a high-density polyethylene, an ultrahigh molecular weight polyethylene, a polypropylene, an ethylene-propylene copolymer, a polybutene, and an ethylene-vinyl acetate copolymer. One of these may be used alone, or two or more thereof may be used in combination.

Among these, in view of versatility of the molded body obtained, a polyethylene, a polypropylene, an ethylene-propylene copolymer, and an ethylene-vinyl acetate copolymer are preferred.

Examples of the polyethylene include "NOVATEC HD HJ360®", "NOVATEC HD HY420®", "NOVATEC HD HE421®" and "NOVATEC HD JF313®" (trade names, produced by Japan Polyethylene Corp.); "HI-ZEX®" (trade name, produced by Prime Polymer Co., Ltd.); and "MINERON®", "MINEACE®" and "MINEFAN®" (trade names, produced by Sankyo Polyethylene Co., Ltd.).

Examples of the polypropylene include "NOVATEC PP FY4®", "NOVATEC PP MA3®", "NOVATEC PP BC03B®", "NOVATEC PP BC06C", "WINTEC®", "NEWCON®" and "Newfoamer®" (trade names, produced by Japan Polypropylene Corporation); and "Prime Polypro J105G®" and "Prime Polypro B241®" (trade names, produced by Prime Polymer Co., Ltd.).

Examples of the thermoplastic elastomer (C) for use in the present invention include a thermoplastic elastomer such as olefin-based elastomer, styrene-based elastomer, polyester-based elastomer, polyamide-based elastomer and polyurethane-based elastomer; and a natural or synthetic rubber such as natural rubber, polyisobutylene, polyisoprene, chloroprene rubber, butyl rubber and nitrile butyl rubber. One of these may be used alone, or two or more thereof may be used in combination.

Among these, in view of versatility of the molded body obtained, an olefin-based elastomer and a styrene-based elastomer are preferred.

Examples of the olefin-based elastomer include an amorphous or microcrystalline ethylene-$\alpha$-olefin copolymer such as ethylene-propylene copolymer (EPR), ethylene-propylene-diene copolymer (EPDM), ethylene-1-butene copolymer and ethylene-1-octene copolymer; polybutene; chlorinated polyethylene; and a partially crosslinked or completely crosslinked product obtained by crosslinking polyethylene, polypropylene or EPDM. One of these may be used alone, or two or more thereof may be used in combination.

Examples of the styrene-based elastomer include a block copolymer such as styrene-butadiene-styrene copolymer (SBS), styrene-isoprene-styrene copolymer (SIS) and styrene-isoprene/butadiene-styrene copolymer (SIBS); and a partially or completely hydrogenated block copolymer such as styrene-ethylene/butene-styrene copolymer (SEBS), hydrogenated SEBS, styrene-ethylene/propylene-styrene copolymer (SEPS), and styrene-butadiene/butylene-styrene copolymer and partially hydrogenated styrene-butadiene-styrene copolymer. One of these may be used alone, or two or more thereof may be used in combination.

The polyolefin-based resin composition of the present invention contains the processing aid for a polyolefin-based resin and the polyolefin-based resin (B) and, if necessary, contains a thermoplastic elastomer (C).

The contents of the polyolefin-based resin (B) and the thermoplastic elastomer (C) may be appropriately set according to the usage of the molded article obtained.

As the resin for use in the polyolefin-based resin composition, a resin in which the polyolefin-based resin (B) and the thermoplastic elastomer (C) are already blended may be used.

Examples of such a resin include "Milastomer 5030N®", "Milastomer 6030N®", "Milastomer 7030N®", "Milastomer 8030N®" and "Milastomer 2600B®" (trade names, produced by Mitsui Chemicals, Inc.); "Thermorun 5800B®", "Thermorun 5850N®" and "Thermorun 3855B®" (trade names, produced by Mitsubishi Chemical Corporation); "Espolex 3785®", "Espolex 820®" and "Espolex 822®" (trade names, produced by Sumitomo Chemical Co., Ltd.); "Santoprene 101-55", "Santoprene 121-68W228®" and "Santoprene 121-50M100®" (trade names, produced by ExxonMobil Corporation). One of these may be used alone, or two or more thereof may be used in combination.

The blending amount of the processing aid for a polyolefin-based resin of the present invention is preferably from 0.1 to 20 parts by mass, more preferably from 0.5 to 10 parts by mass, per 100 parts by mass of the total of the polyolefin-based resin (B) and the thermoplastic elastomer (C).

When the blending amount of the processing aid for a polyolefin-based resin is 0.1 parts by mass or more, the obtained polyolefin-based resin composition is excellent in melt tension and fluidity. Also, when the blending amount of the processing aid for a polyolefin-based resin is 20 parts by mass or less, original characteristics of the polyolefin-based resin (B) are not impaired.

Incidentally, in the description of the present invention, 100 parts by mass of the total of the polyolefin-based resin (B) and the thermoplastic elastomer (C) includes the case where the blending amount of the thermoplastic elastomer (C) is 0 parts by mass.

In the polyolefin-based resin composition, if desired, various additives such as a filler, flame retardant, stabilizer, lubricant, foaming agent, plasticizer and rubber softener may be further blended.

Examples of the filler include calcium carbonate, magnesium carbonate, calcium sulfate, barium sulfate, magnesium hydroxide, aluminum hydroxide, talc, mica, kaolin, titanium white, white carbon, carbon black, glass fiber, and carbon fiber. One of these may be used alone, or two or more thereof may be used in combination.

The blending amount of the filler is preferably from 0.1 to 400 parts by mass per 100 parts by mass of the total of the polyolefin-based resin (B) and the thermoplastic elastomer (C).

When the blending amount of the filler is 0.1 parts by mass or more, the effect by the blending of a filler is sufficiently brought out, and when the blending amount of the filler is 400 parts by mass or less, original characteristics of the polyolefin-based resin (B) are not impaired.

Examples of the flame retardant include a phosphoric acid ester compound such as trimethyl phosphate, triethyl phosphate, tributyl phosphate, trioctyl phosphate, tributoxyethyl phosphate, triphenyl phosphate, tricresyl phosphate, cresylphenyl phosphate, octyldiphenyl phosphate, diisopropylphenyl phosphate, tris(chloroethyl)phosphate, alkoxy-substituted bisphenol A bisphosphate, hydroquinone bisphosphate, resorcin bisphosphate and trioxybenzene triphosphate;

a halogen-containing compound such as tetrabromobisphenol A, decabromodiphenyl oxide, hexabromocyclododecane, octabromodiphenyl ether, bistribromophenoxyethane, ethylenebistetrabromophthalimide, tribromophenol, halogenated epoxy oligomer obtainable by the reaction of halogenated bisphenol A and epihalohydrin, carbonate oligomer containing halogenated bisphenol A as a constituent component, halogenated polystyrene, chlorinated polyolefin and polyvinyl chloride; a metal oxide; and a sulfamic acid compound. One of these may be used alone, or two or more thereof may be used in combination.

The blending amount of the flame retardant varies depending on the type of flame retardant, but is preferably from 10 to 200 parts by mass per 100 parts by mass of the total of the polyolefin resin (B) and the thermoplastic elastomer (C).

Examples of the stabilizer include a phenol-based antioxidant such as pentaerythrityl-tetrakis[3-(3,5-di-tert-butyl-4-hydroxyphenyl) propionate] and triethylene glycol-bis[3-(3-tert-butyl-5-methyl-4-hydroxyphenyl) propionate]; a phosphorus-based antioxidant such as tris(monononylphenyl)phosphite and tris(2,4-di-tert-butylphenyl) phosphite; a sulfur-based antioxidant such as dilauryl thiodipropionate; a hindered amine-based light stabilizer such as "Tinuvin-770®" (trade name, produced by Ciba Japan) and "Adekastab LA-57®" (trade name, produced by ADEKA Corporation); and an ultraviolet absorber such as "Tinuvin 1577FF®" (trade name, produced by Ciba Japan) and "Adekastab LA-32®" (trade name, produced by ADEKA Corporation). One of these may be used alone, or two or more thereof may be used in combination.

Examples of the lubricant include a sodium, calcium or magnesium salt of lauric acid, palmitic acid, oleic acid or stearic acid.

The foaming agent includes, for example, an inorganic foaming agent, a volatile foaming agent, and a decomposition-type foaming agent.

Examples of the inorganic foaming agent include carbon dioxide, air, and nitrogen.

Examples of the volatile foaming agent include an aliphatic hydrocarbon such as propane, n-butane, i-butane and pentane; a cyclic aliphatic hydrocarbon such as cyclobutane and cyclopentane; and a halogenated hydrocarbon such as trichlorofluoromethane, dichlorodifluoromethane, dichlorotetrafluoroethane, methyl chloride, ethyl chloride and methylene chloride.

Examples of the decomposition-type foaming agent include azodicarbonamide, dinitrosopentamethylenetetramine, azobisisobutyronitrile, and sodium bicarbonate.

One of these may be used alone, or two or more thereof may be used in combination.

The blending amount of the foaming agent varies depending on the kind of the foaming agent but is preferably from 0.1 to 25 parts by mass per 100 parts by mass of the total of the polyolefin-based resin (B) and the thermoplastic elastomer (C).

The rubber softener is generally a mixture obtainable by combining three members, i.e., an aromatic ring, a naphthene ring and a paraffin chain. As the rubber softener, out of mineral oil-based rubber softeners, a process oil referred to as paraffin, and a process oil referred to as naphthene are used. In addition, a white oil, a mineral oil, an oligomer of ethylene and $\alpha$-olefin, a low molecular-weight polybutadiene, a low molecular-weight polybutadiene, paraffin wax, and liquid paraffin may be used. Among these, a process oil of paraffin is preferably used.

Examples of the rubber softener include NA Solvent (trade name, isoparaffin-based hydrocarbon oil) produced by Nippon Fats & Oils Co., PW-90 (trade name, n-paraffin-based process oil) produced by Idemitsu Kosan Co., Ltd., IP-solvent 2835 (trade name, synthetic isoparaffin-based hydrocarbon, 99.8 mass% or more of isoparaffin) produced by Idemitsu Petrochemical Co., Ltd., and Neothiozol (trade name, n-paraffin-based process oil) produced by Sanko Chemical Co., Ltd. One of these may be used alone, or two or more thereof may be used in combination.

The blending amount of the rubber softener is preferably from 10 to 300 parts by mass, more preferably from 50 to 200 parts by mass, per 100 parts by mass of the total of the polyolefin-based resin (B) and the thermoplastic elastomer (C).

When the blending amount of the rubber softener is 10 parts by mass or more, the effect of imparting flexibility is sufficiently brought out. Also, when the blending amount of the rubber softener is 300 parts by mass or less, original characteristics of the polyolefin-based resin (B) are not impaired.

If various additives such as filler, flame retardant, stabilizer, lubricant, foaming agent, plasticizer and rubber softener are not adequately dispersed in the polyolefin-based resin (B), the effect by the blending may be insufficient. By blending the processing aid for a polyolefin-based resin of the present invention, not only mold processability of the obtained polyolefin-based resin composition is enhanced but also dispersibility of various additives in the polyolefin-based resin (B) is enhanced, so that a further effect by the blending can be expected.

In addition, by blending the processing aid for a polyolefin-based resin of the present invention, an effect of preventing bleed-out of various additives having low compatibility with the polyolefin-based resin (B) can be also expected.

The polyolefin-based resin composition of the present invention is prepared by blending the processing aid for a polyolefin-based resin, the polyolefin-based resin (B) and, if desired, the thermoplastic elastomer (C) and various additives, and melt-kneading the mixture by a known method such as extrusion kneading and roll kneading.

As the melt-kneading method, the processing aid for a polyolefin-based resin of the present invention, the polyolefin-based resin (B) and, if desired, the thermoplastic elastomer (C) and various additives may be melt-kneaded en bloc, or a multistage mixing of mixing the processing aid for a polyolefin-based resin and a part of the thermoplastic elastomer (C) to prepare a master batch, and then blending the remaining polyolefin-based resin (B) and, if desired, a part of the thermoplastic elastomer (C) and various additives, may be also employed.

The molded article of the present invention is obtained by molding the polyolefin-based resin composition of the present invention.

Examples of the molding method include extrusion molding, injection molding, calendering, blow molding, thermoforming, foam molding, and melt spinning.

The obtained polyolefin-based resin composition is excellent in melt tension and fluidity and therefore, the molded article of the present invention is suitable for an automobile member, a home appliance member, a medical member, a building member and a packaging material. The present invention thus refers to the following embodiments:

[1] Use of (A) an alkyl methacrylate-based polymer containing, as a main component, a unit of (a1) an alkyl methacrylate in which the alkyl group has a carbon number of 2 to 10, and having a mass average molecular weight of 15,000 to 145,000 measured by gel permeation chromatography, wherein in the alkyl methacrylate-based polymer (A), per 100 mass%of all monomer units, the content of the unit of (a1) an alkyl methacrylate with the alkyl group having a carbon number of 2 to 10 is 50 mass% or more, as a processing aid for a polyolefin-based resin.

[2] Use as in [1], wherein said unit of (a1) is a unit of an alkyl methacrylate with the alkyl group having a carbon number of 4.

[3] Use as in [1], wherein said unit of (a1) is an i-butyl methacrylate unit.

[4] Use as in any one of [1] to [3], wherein the mass average molecular weight of the alkyl methacrylate-based polymer (A) is from 20,000 to 100,000.

[5] A polyolefin-based resin composition comprising the processing aid for a polyolefin-based resin of any one of [1] to [4] and (B) a polyolefin-based resin.

[6] A polyolefin-based resin composition comprising the processing aid for a polyolefin-based resin of any one of [1] to [4], (B) a polyolefin-based resin and (C) a thermoplastic elastomer.

[7] A polyolefin-based resin composition of [5] or [6], wherein the polyolefin-based resin (B) is polypropylene.

[8] A molded article obtainable by molding the polyolefin-based resin composition of any one of [5] to [7].

EXAMPLES

The present invention is described below by referring to Examples, but the present invention is not limited to these Examples.

In Examples, "parts" and "%" indicate "parts by mass" and "mass%", respectively.

Measurements of various physical properties in Examples and Comparative Examples were performed by the following methods (1) to (6).

(1) Mass Average Molecular Weight and Molecular Weight Distribution

Using a dissolved portion of the alkyl methacrylate-based polymer (A) in tetrahydrofuran as a sample, the mass average molecular weight and number average molecular weight of the obtained alkyl methacrylate-based polymer (A) were measured by means of gel permeation chromatography ("HLC-8220", machine name, manufactured by Tosoh Corporation) with a column ("TSK-GEL SUPER MULTIPORE HZ-H®", trade name, produced by Tosoh Corporation, 4.6 mm (inner diameter)×15 cm (length)x2) under the conditions of an eluent of tetrahydrofuran and a measurement temperature of 40°C, and determined from a calibration curve by standard polystyrene.

Furthermore, the molecular weight distribution was calculated according to the following formula:

```
Molecular weight distribution = (mass average
molecular weight)/(number average molecular weight)
```

(2) Powder Handleability

The processing aid for a polyolefin-based resin was passed through an 8-mesh sieve and evaluated for handleability as a powder according to the following criteria.

○: The amount passed through the sieve was 80% or more.
△: The amount passed through the sieve was from 10% to less than 80%.
×: The amount passed through the sieve was less than 10%.

(3) Melt Tension

The obtained polyolefin-based resin composition was extruded in constant amount (1.57 cm$^3$/min) by using a capillary rheometer ("Twin capillary rheometer Model RH-7", machine name, manufactured by ROSAND) under the conditions of a die diameter=$\phi$1 mm, L/D=16 and a temperature of 190°C, and a strand was drawn out at a constant rate (3 m/min) and measured for the melt tension.

The melt tension is an index for judging the mold processability such as extrusion molding property, blow molding property and foam molding property, and enhancement of the melt tension can be regarded as improvement of the mold processability.

(4) MFR (Melt Flow Rate)

The obtained polyolefin-based resin composition was measured for MFR in accordance with ASTM D1238 by using a melt indexer ("L-243-1531", machine name, manufactured by Techno Seven Co., Ltd.) under the conditions of a load of 2.16 kg and a measurement temperature of 230°C.

(5) Mold Processability

The edge of the obtained heterogeneous extrusion-molded article was observed with an eye, and the mold processability was evaluated according to the following criteria.

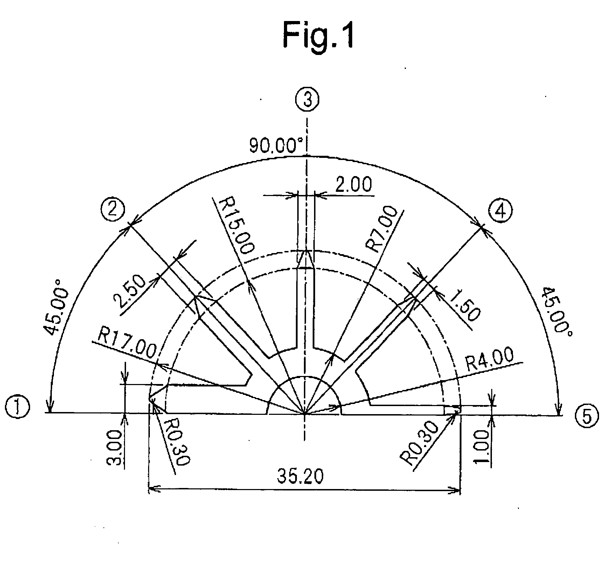

○: No edge breakage in [1] to [4] of Fig. 1.
×: An edge breakage was not observed in [1] to [3] of Fig. 1 but observed in [4].

(6) Evaluation of Die Build-Up

In the case where the polyolefin-based resin composition is low in the melt tension and at the same time, low in the lubricity, a die build-up may be generated in the periphery of the extruder die, and the die build-up may attach to the heterogeneous extrusion-molded article.

The number of die build-ups attached to the edge of [3] in 20 cm of the obtained heterogeneous extrusion-molded article was counted, and the evaluation of die build-up was performed according to the following criteria.

○: No die build-up.
△: Number of die build-ups was from 1 to 5.
×: Number of die build-ups was 6 or more.

[Example 1]

Into a separable flask (volume: 5 liters) equipped with a thermometer, a nitrogen inlet tube, a cooling tube and a stirring device, 300 parts (3,000 grams) of deionized water, 98 parts of i-butyl methacrylate, 2 parts of n-butyl acrylate, 0.22 parts of n-octyl mercaptan and 1.1 parts of sodium dodecylbenzenesulfonate were charged, and the atmosphere in the flask was replaced with nitrogen by passing a nitrogen stream into the separable flask. Subsequently, the inner temperature was raised to 60°C, and 0.15 parts of potassium persulfate and 5 parts of deionized water were added thereto. After continuing heating and stirring for 2 hours, the polymerization was completed to obtain a latex of Alkyl Methacrylate-Based Polymer (A1).

The obtained latex of Alkyl Methacrylate-Based Polymer (A1) was added dropwise to 400 parts of hot water at 70°C containing 5 parts of calcium acetate, and then the temperature was raised to 90°C, thereby effecting coagulation. The obtained coagulation product was separated, washed and dried at 60°C for 16 hours to obtain Alkyl Methacrylate-Based Polymer (A1). The mass average molecular weight of Polymer (A1) was 110,000, and the molecular weight dispersion was 1.9.

The obtained Alkyl Methacrylate-Based Polymer (A1) was designated as Processing Aid (1) for a polyolefin-based resin. Powder handleability of Processing Aid (1) was evaluated, and the result is shown in Table 1.

[Examples 2 to 7 and Comparative Examples 1 to 6]

Alkyl Methacrylate-Based Polymers (A2) to (A13) were obtained in the same manner as in Example 1 except that the composition of the monomer component and the amount of the chain transfer agent were changed as shown in Table 1.

Alkyl Methacrylate-Based Polymers (A2) to (A13) were designated as Processing Aids (2) to (13) for a polyolefin-based resin.

[Comparative Example 7]

300 Parts of deionized water, 98 parts of lauryl methacrylate, 2 parts of n-butyl acrylate, 0.7 parts of n-octyl mercaptan, 1.1 parts of sodium dodecylbenzenesulfonate and 0.1 parts of tert-butyl hydroperoxide were stirred at 10,000 rpm for 2 minutes by using a homomixer and then forcedly emulsified at a pressure of 200 kg/cm$^2$ by using a homogenizer to obtain an emulsion mixture.

This emulsion mixture was charged into a separable flask equipped with a thermometer, a nitrogen inlet tube, a cooling tube and a stirring device, and the inner temperature was raised to 60°C in a nitrogen atmosphere. Subsequently, 0.0001 parts of ferrous sulfate, 0.0003 parts of disodium ethylenediaminetetraacetate, 0.3 parts of Rongalit and 5 parts of deionized water were charged and after continuing heating and stirring for 2 hours, the polymerization was completed to obtain a latex of Alkyl Methacrylate-Based Polymer (A14).

The obtained latex of Alkyl Methacrylate-Based Polymer (A14) was added dropwise to 400 parts of cold water at 25°C containing 5 parts of calcium acetate, thereby effecting coagulation. The obtained coagulation product was separated, washed and dried at 50°C for 16 hours to obtain Alkyl Methacrylate-Based Polymer (A14).

The obtained Alkyl Methacrylate-Based Polymer (A14) was designated as Processing Aid (14) for a polyolefin-based resin.

[Comparative Example 8]

Alkyl Methacrylate-Based Polymer (A15) was obtained in the same manner as in Comparative Example 7 except that the composition of the monomer component and the amount of the chain transfer agent were changed as shown in Table 1.

Alkyl Methacrylate-Based Polymer (A15) was designated as Processing Aid (15) for a polyolefin-based resin.

[Comparative Example 9]

300 Parts of deionized water, 70 parts of lauryl methacrylate, 0.49 parts of n-octyl mercaptan, 1.1 parts of sodium dodecylbenzenesulfonate and 0.07 parts of tert-butyl hydroperoxide were stirred at 10,000 rpm for 2 minutes by using a homomixer and then forcedly emulsified at a pressure of 200 kg/cm$^2$ by using a homogenizer to obtain an emulsion mixture.

This emulsion mixture was charged into a separable flask equipped with a thermometer, a nitrogen inlet tube, a cooling tube and a stirring device, and the inner temperature was raised to 60°C in a nitrogen atmosphere. Subsequently, 0.0001 parts of ferrous sulfate, 0.0003 parts of disodium ethylenediaminetetraacetate, 0.21 parts of Rongalit and 5 parts of deionized water were charged and after continuing heating and stirring for 2 hours, the polymerization was terminated to complete first-stage polymerization.

Thereafter, the inner temperature was kept at 60°C and then, 0.09 parts of Rongalit and 5 parts of deionized water were charged, and a mixture containing 30 parts of methyl methacrylate, 0.21 parts of n-octyl mercaptan and 0.03 parts of tert-butyl hydroperoxide was added dropwise over 30 minutes. After continuing heating and stirring for 2 hours, the polymerization was completed to obtain a latex of Alkyl Methacrylate-Based Polymer (A16).

The obtained latex of Alkyl Methacrylate-Based Polymer (A16) was added dropwise to 400 parts of hot water at 70°C containing 5 parts of calcium acetate, and then the temperature was raised to 90°C, thereby effecting coagulation. The obtained coagulation product was separated, washed and dried at 60°C for 16 hours to obtain Alkyl Methacrylate-Based Polymer (A16).

The obtained Alkyl Methacrylate-Based Polymer (A16) was designated as Processing Aid (16) for a polyolefin-based resin.

[Table 1]

Table 1

| | | Example 1 | Example 2 | Example 3 | Example 4 | Example 5 | Example 6 | Example 7 |
|---|---|---|---|---|---|---|---|---|
| Alkyl methacrylate-based polymer | | (A1) | (A2) | (A3) | (A4) | (A5) | (A6) | (A7) |
| Monomer component (a) [parts] | i-BMA | 98 | 98 | 98 | 78 | 58 | – | – |
| | MMA | – | – | – | 20 | 40 | – | – |
| | EMA | – | – | – | – | – | 98 | – |
| | n-BMA | – | – | – | – | – | – | 98 |
| | n-BA | 2 | 2 | 2 | 2 | 2 | 2 | 2 |
| | i-BA | – | – | – | – | – | – | – |
| Polymerization initiator [parts] | Potassium persulfate | 0.15 | 0.15 | 0.15 | 0.15 | 0.15 | 0.15 | 0.15 |
| Chain transfer agent [parts] | nOM | 0.22 | 0.5 | 1.0 | 0.5 | 0.5 | 0.5 | 0.5 |
| Mass average molecular weight | | 110000 | 50000 | 30000 | 50000 | 50000 | 50000 | 50000 |
| Molecular weight distribution (mass average molecular weight/number average molecular weight) | | 1.9 | 1.9 | 1.7 | 1.8 | 1.8 | 1.9 | 1.8 |
| Processing aid for polyolefin-based resin | | (1) | (2) | (3) | (4) | (5) | (6) | (7) |
| Powder handleability | | O | O | O | O | O | O | O |

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | |
|---|---|---|---|---|---|---|---|---|---|---|---|
| Alkyl methacrylate-based polymer | | (A8) | (A9) | (A10) | (A11) | (A12) | (A13) | (A14) | (A15) | (A16) | |
| | | | | | | | | | | First stage | Second stage |
| Monomer component (a) [parts] | i-BMA | 98 | 98 | 98 | – | – | – | – | – | – | – |
| | MMA | – | – | – | – | – | 98 | – | – | – | 30 |
| | EMA | – | – | – | 98 | – | – | – | – | – | – |
| | n-BMA | – | – | – | – | 98 | – | – | – | – | – |
| | LMA | – | – | – | – | – | – | 98 | – | 70 | – |
| | n-BA | 2 | 2 | 2 | 2 | 2 | 2 | 2 | – | – | – |
| | i-BA | – | – | – | – | – | – | – | 100 | – | – |
| Polymerization initiator [parts] | Potassium persulfate | 0.15 | 0.15 | 0.15 | 0.15 | 0.15 | 0.15 | – | – | – | – |
| | tBH | – | – | – | – | – | – | 0.1 | 0.1 | 0.07 | 0.03 |
| Chain transfer agent [parts] | nOM | 3.5 | 0.1 | – | 0.1 | 0.1 | 0.5 | 0.7 | 0.7 | 0.49 | 0.21 |
| Mass average molecular weight | | 8000 | 170000 | 2500000 | 170000 | 170000 | 50000 | 50000 | 50000 | 50000 | |
| Molecular weight distribution (mass average molecular weight/number average molecular weight) | | 1.8 | 2.0 | 5.5 | 2.0 | 2.0 | 2.0 | 2.1 | 2.1 | 2.8 | |
| Processing aid for polyolefin-based resin | | (8) | (9) | (10) | (11) | (12) | (13) | (14) | (15) | (16) | |
| Powder handleability | | × | O | O | O | O | O | × | × | O | |

EP 2 505 605 B1

Abbreviations in Table 1 are as follows.
i-BMA: i-Butyl methacrylate
MMA: Methyl methacrylate
EMA: Ethyl methacrylate
n-BMA: n-Butyl methacrylate
LMA: Lauryl methacrylate
n-BA: n-Butyl acrylate
i-BA: i-Butyl acrylate
tBH: tert-Butyl hydroperoxide
nOM: n-Octyl mercaptan

[Examples 8 to 17 and Comparative Examples 10 to 17]

100 Parts (2,000 gram) of polypropylene-based resin ("NOVATEC PP FY4®", trade name, produced by Japan Polyethylene Corp.) as the polyolefin-based resin (B) and Processing Aids (1) to (13) and (16) for a polyolefin-based resin were blended as shown in Table 2 and mixed by hand blending. Incidentally, Processing Aid (8) was in lump form and therefore, was pulverized and then used.
Thereafter, the mixture was melt-kneaded by using a $\phi$30-mm co-rotating twin-screw extruder ("BT-30", machine name, manufactured by Research Laboratory of Plastics Technology Co. Ltd., L/D=30) under the conditions of a screw rotation speed of 200 rpm and a cylinder temperature of 200°C to obtain a polyolefin-based resin composition.
The melt tension and MFR of the polyolefin-based resin composition obtained are shown in Table 2.
[Table 2]

Table 2

| Polyolefin-Based Resin Composition | | Example 8 | Example 9 | Example 10 | Example 11 | Example 12 | Example 13 | Example 14 | Example 15 | Example 16 | Example 17 |
|---|---|---|---|---|---|---|---|---|---|---|---|
| Polyolefin-based resin (B) [parts] | | 100 | 100 | 100 | 100 | 100 | 100 | 100 | 100 | 100 | 100 |
| Processing aid | Kind | (1) | (2) | (3) | (4) | (5) | (6) | (7) | (1) | (2) | (3) |
| | Mass average molecular weight | 110000 | 50000 | 30000 | 50000 | 50000 | 50000 | 50000 | 110000 | 50000 | 30000 |
| | [parts] | 5 | 5 | 5 | 5 | 5 | 5 | 5 | 8 | 8 | 8 |
| Melt tension [N] | | 0.035 | 0.037 | 0.043 | 0.034 | 0.030 | 0.031 | 0.036 | 0.042 | 0.043 | 0.044 |
| MFR [g/10 min] | | 4.50 | 4.74 | 4.85 | 4.61 | 4.53 | 4.70 | 4.71 | 4.60 | 5.27 | 5.74 |

| Polyolefin-Based Resin Composition | | Comparative Example 10 | Comparative Example 11 | Comparative Example 12 | Comparative Example 13 | Comparative Example 14 | Comparative Example 15 | Comparative Example 16 | Comparative Example 17 |
|---|---|---|---|---|---|---|---|---|---|
| Polyolefin-based resin (B) [parts] | | 100 | 100 | 100 | 100 | 100 | 100 | 100 | 100 |
| Processing aid | Kind | (8) | (9) | (10) | (11) | (12) | (13) | (16) | - |
| | Mass average molecular weight | 8000 | 170000 | 2500000 | 170000 | 170000 | 50000 | 50000 | - |
| | [parts] | 5 | 5 | 5 | 5 | 5 | 5 | 5 | - |
| Melt tension [N] | | 0.015 | 0.032 | 0.035 | 0.025 | 0.031 | could not be measured | 0.024 | 0.015 |
| MFR [g/10 min] | | 5.21 | 4.28 | 4.05 | 4.27 | 4.29 | 4.69 | 4.40 | 4.30 |

EP 2 505 605 B1

[Examples 18 to 21 and Comparative Examples 18 to 23]

Polypropylene-based resin ("NOVATEC PP FY4®", trade name, produced by Japan Polyethylene Corp.) as the polyolefin-based resin (B), hydrogenated styrene-based elastomer ("Tuftec H1062®", trade name, produced by Asahi Kasei Chemicals Corp.) as the thermoplastic elastomer (C) and Processing Aids (1) to (3), (7) to (10), (12) and (13) for a polyolefin-based resin were blended as shown in Table 3 and mixed by hand blending. Incidentally, Processing Aid (8) was in lump form and therefore, was pulverized and then used.

Thereafter, the mixture was melt-kneaded by using a $\phi$30-mm co-rotating twin-screw extruder ("BT-30", machine name, manufactured by Research Laboratory of Plastics Technology Co., Ltd., L/D=30) under the conditions of a screw rotation speed of 200 rpm and a cylinder temperature of 200°C to obtain a polyolefin-based resin composition.

The melt tension and MFR of the polyolefin-based resin composition obtained are shown in Table 3.

[Table 3] Table 3

| Polyolefin-Based Resin Composition | | Example 18 | Example 19 | Example 20 | Example 21 | Comparative Example 18 | Comparative Example 19 | Comparative Example 20 | Comparative Example 21 | Comparative Example 22 | Comparative Example 23 |
|---|---|---|---|---|---|---|---|---|---|---|---|
| Polyolefin-based resin (B) [parts] | | 80 | 80 | 80 | 80 | 80 | 80 | 80 | 80 | 80 | 80 |
| Thermoplastic elastomer (C) [parts] | | 20 | 20 | 20 | 20 | 20 | 20 | 20 | 20 | 20 | 20 |
| Processing aid | Kind | (1) | (2) | (3) | (7) | (8) | (9) | (10) | (12) | (13) | - |
| | Mass average molecular weight | 110000 | 50000 | 30000 | 50000 | 8000 | 170000 | 2500000 | 170000 | 50000 | - |
| | [parts] | 5 | 5 | 5 | 5 | 5 | 5 | 5 | 5 | 5 | - |
| Melt tension [N] | | 0.028 | 0.031 | 0.031 | 0.029 | 0.017 | 0.026 | 0.028 | 0.024 | 0.017 | 0.018 |
| MFR [g/10 min] | | 5.70 | 5.72 | 6.00 | 5.71 | 6.20 | 5.57 | 5.24 | 5.55 | 5.71 | 5.63 |

[Examples 22 and 23 and Comparative Examples 24 to 27]

"Santoprene 121-68W228®" (trade name, produced by ExxonMobil Corporation) as a resin containing the polyolefin-based resin (B) and the thermoplastic elastomer (C), and Processing Aids (1), (2), (9), (10) and (16) for a polyolefin-based resin were blended as shown in Table 4 and melt-kneaded in the same manner as in Example 8 to obtain a polyolefin-based resin composition.

The obtained polyolefin-based resin composition was melt-kneaded by using a $\phi$30-mm single-screw extrude ("GM-30", machine name, manufactured by GM Engineering, Inc., L/D=35) fitted with a heterogeneous die (Fig. 1) under the conditions of a screw rotation speed of 30 rpm and a barrel temperature of 190°C to obtain a heterogeneous extrusion-molded article.

Incidentally, the molded article extruded from the heterogeneous die was withdrawn parallel to the extrusion direction at a constant rate and cut when withdrawn by 20 cm.

The mold processability and die build-up evaluation results of the obtained heterogeneous extrusion-molded article are shown in Table 4.

[Table 4]

Table 4

| Polyolefin-Based Resin Composition | | Example 22 | Example 23 | Comparative Example 24 | Comparative Example 25 | Comparative Example 26 | Comparative Example 27 |
|---|---|---|---|---|---|---|---|
| Polyolefin-based resin (B)+ thermoplastic elastomer (C) [parts] | | 100 | 100 | 100 | 100 | 100 | 100 |
| Processing aid | Kind | (1) | (2) | (9) | (10) | (16) | - |
| | Mass average molecular weight | 110000 | 50000 | 170000 | 2500000 | 50000 | - |
| | [parts] | 5 | 5 | 5 | 5 | 5 | - |
| Mold processability | | ○ | ○ | × | × | × | × |
| Evaluation result of die build-up | | ○ | ○ | Δ | Δ | Δ | × |

As apparent from Table 1, Processing Aids (1) to (7) for a polyolefin-based resin of Examples 1 to 7 exhibited good handleability as a powder. Since Processing Aids (1) to (7) are easily mixable with the polyolefin-based resin when hand-blended and can be stably fed by a feeder, uniform kneading with the polyolefin-based resin is possible.

Processing Aid (8) for a polyolefin-based resin, where the mass average molecular weight falls below the range of the present invention, was in lump form and exhibited bad handleability as a powder (Comparative Example 1).

Processing Aids (14) and (15) for a polyolefin-based resin, where the kind of the monomer unit is out of the range of the present invention, were a paste-like material with high viscosity and exhibited bad handleability as a powder (Comparative Examples 7 and 8). Hand blending or feeding by a feeder was difficult and in turn, use as a processing aid was troublesome.

As apparent from Tables 2 and 3, the polyolefin-based compositions containing Processing Aids (1) to (7) for a polyolefin-based resin of the present invention were excellent in melt tension and MFR (Examples 8 to 21).

The polyolefin-based resin composition not containing a polyolefin-based processing aid was not adequately balanced between melt tension and MFR and was poor in the mold processability (Comparative Examples 17 and 23).

The polyolefin-based resin composition containing Processing Aid (8) for a polyolefin-based resin, where the mass average molecular weight falls below the range of the present invention, was not enhanced in the melt tension (Comparative Examples 10 and 18).

The polyolefin-based resin compositions containing Processing Aids (9) to (12) for a polyolefin-based resin, where the mass average molecular weight exceeds the range of the present invention, were not adequately balanced between melt tension and MFR and were poor in the mold processability (Comparative Examples 11 to 14 and 19 to 21).

Processing Aid (13) for a polyolefin-based resin, where the carbon number of the alkyl group of the alkyl methacrylate unit is out of the range of the present invention, lacked dispersibility in the polyolefin-based resin (Comparative Examples 15 and 22). In Comparative Example 15, due to bad compatibility with the polyolefin-based resin (B), a strand could not be withdrawn and therefore, the melt tension could not be measured. In Comparative Example 22, the melt tension was low.

The polyolefin-based resin composition containing Processing Aid (16) for a polyolefin-based resin, in which the kind of the monomer unit is out of the range of the present invention and which is polymerized in two stages, was not adequately balanced between melt tension and MFR and was poor in the mold processability (Comparative Example 16).

As apparent from Table 4, the polyolefin-based resin composition where the processing aid for a polyolefin-based resin of the present invention is added, was enhanced in the mold processability and at the same time, excellent in the die build-up inhibiting effect (Examples 22 and 23).

The polyolefin-based resin compositions containing Processing Aids (9) and (10) for a polyolefin-based resin, where the mass average molecular weight exceeds the range of the present invention, and the polyolefin-based resin composition containing Processing Aid (16) for a polyolefin-based resin, in which the kind of the monomer unit is out of the range of the present invention and which is polymerized in two stages, were poor in the mold processability and die build-up inhibiting effect (Comparative Examples 24 to 26).

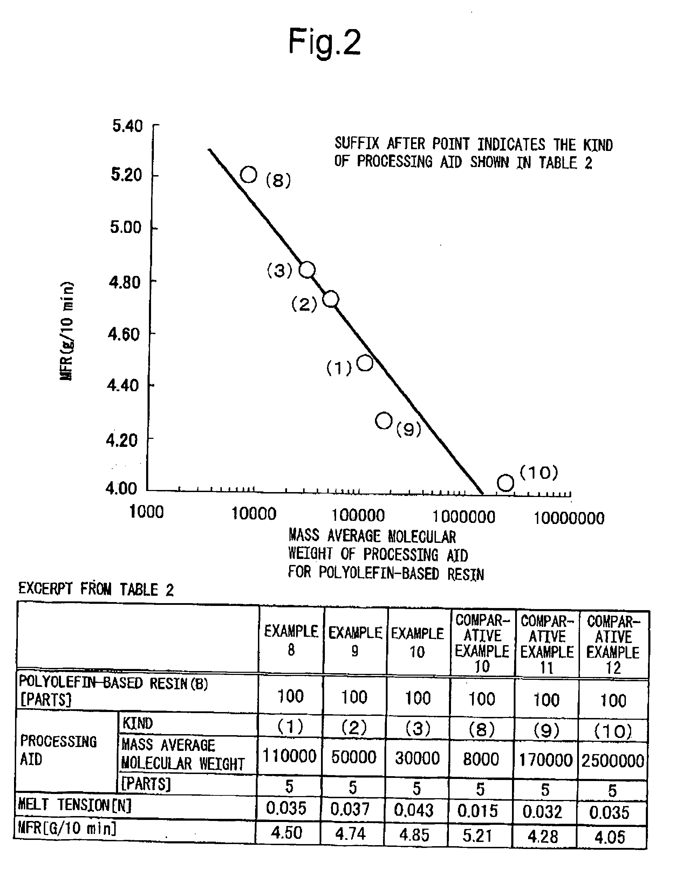

Fig. 2 shows the relationship between mass average molecular weight and MFR of Examples 8 to 10 and Comparative Examples 10 to 12, based on the results in Table 2 (the processing aids for a polyolefin-based resin of Examples 8 to 10 and Comparative Examples 10 to 12 are composed of the same monomer component and differ in the mass average molecular weight).

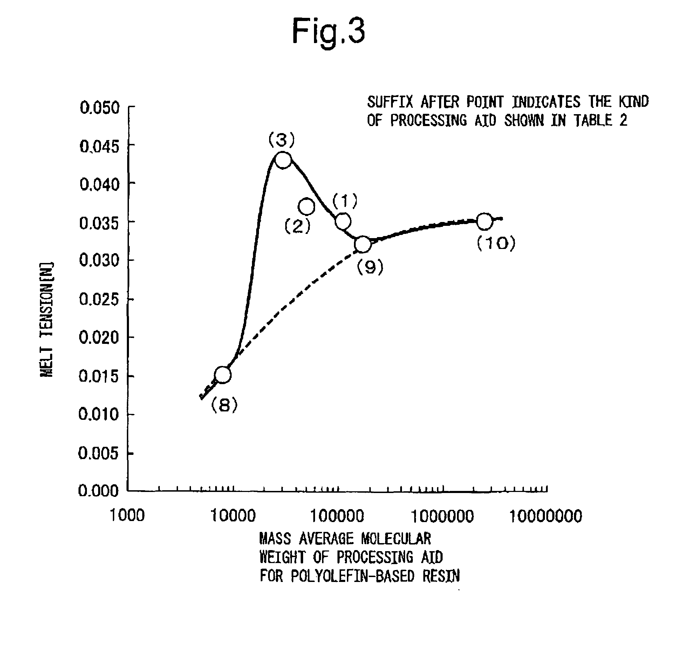

As apparent from Fig. 2, in the relationship between the mass average molecular weight of the processing aid for a polyolefin-based resin and the fluidity of the polyolefin-based resin composition containing the polyolefin-based processing aid, there is a correlation. In this connection, as apparent from Fig. 3 similarly showing the relationship between the mass average molecular weight and the melt tension, the melt tension is excellent specifically in the mass average molecular weight range of the present invention.

INDUSTRIAL APPLICABILITY

The polyolefin-based resin composition having blended therein the processing aid for a polyolefin-based resin of the present invention is excellent in mold processability, i.e., excellent in melt tension, fluidity and die build-up inhibiting effect, and therefore, the molded article obtained is suitable for an automobile member, a home appliance member, a medical member, a building member and a packaging material.

**Claims**

1. Use of (A) an alkyl methacrylate-based polymer containing, as a main component, a unit of (a1) an alkyl methacrylate in which the alkyl group has a carbon number of 2 to 10, and having a mass average molecular weight of 15,000 to 145,000 measured by gel permeation chromatography, wherein in the alkyl methacrylate-based polymer (A), per 100 mass% of all monomer units, the content of the unit of (a1) an alkyl methacrylate with the alkyl group having a carbon number of 2 to 10 is 50 mass% or more, as a processing aid for a polyolefin-based resin.

2. Use as claimed in claim 1, wherein said unit of (a1) is a unit of an alkyl methacrylate with the alkyl group having a carbon number of 4.

3. Use as claimed in claim 1, wherein said unit of (a1) is an i-butyl methacrylate unit.

4. Use as claimed in any one of claims 1 to 3, wherein the mass average molecular weight of the alkyl methacrylate-based polymer (A) is from 20,000 to 100,000.

5. A polyolefin-based resin composition comprising the processing aid for a polyolefin-based resin claimed in any one of claims 1 to 4 and (B) a polyolefin-based resin.

6. A polyolefin-based resin composition comprising the processing aid for a polyolefin-based resin claimed in any one of claims 1 to 4, (B) a polyolefin-based resin and (C) a thermoplastic elastomer.

7. A polyolefin-based resin composition claimed in claim 5 or 6, wherein the polyolefin-based resin (B) is polypropylene.

8. A molded article obtainable by molding the polyolefin-based resin composition claimed in any one of claims 5 to 7.


**Patentansprüche**

1. Verwendung von (A) einem Alkylmethacrylat-basierten Polymer, enthaltend als Hauptkomponente eine Einheit (a1) eines Alkylmethacrylats, in dem die Alkylgruppe eine Kohlenstoffzahl von 2 bis 10 aufweist, mit einem gewichtsmittleren Molekulargewicht von 15.000 bis 145.000, gemessen durch Gelpermeationschromatographie, worin in dem Alkylmethacrylat-basierten Polymer (A), bezogen auf 100 Gew.-% aller Monomer-einheiten, der Gehalt an der Einheit (a1) eines Alkylmethacrylats mit der Alkylgruppe mit einer Kohlenstoffzahl von 2 bis 10 50 Gew.-% oder mehr beträgt, als Verarbeitungshilfsmittel für ein Polyolefin-basiertes Harz.

2. Verwendung nach Anspruch 1, worin die Einheit (a1) eine Einheit eines Alkylmethacrylats mit einer Alkylgruppe mit einer Kohlenstoffzahl von 4 ist.

3. Verwendung nach Anspruch 1, worin die Einheit (a1) eine i-Butylmethacrylat-Einheit ist.

4. Verwendung nach einem der Ansprüche 1 bis 3, worin das gewichtsmittlere Molekulargewicht des Alkylmethacrylat-basierten Polymers (A) von 20.000 bis 100.000 reicht.

5. Polyolefin-basierte Harzzusammensetzung, umfassend das Verarbeitungshilfsmittel für ein Polyolefin-basiertes Harz nach einem der Ansprüche 1 bis 4 und (B) ein Polyolefinbasiertes Harz.

6. Polyolefin-basierte Harzzusammensetzung, umfassend das Verarbeitungshilfsmittel für ein Polyolefin-basiertes Harz nach einem der Ansprüche 1 bis 4, (B) ein Polyolefinbasiertes Harz und (C) ein thermoplastisches Elastomer.

7. Polyolefin-basierte Harzzusammensetzung nach Anspruch 5 oder 6, worin das Polyolefin-basierte Harz (B) Polypropylen ist.

8. Formartikel, erhältlich durch Formen der Polyolefin-basierten Harzzusammensetzung nach einem der Ansprüche 5 bis 7.


**Revendications**

1. Utilisation de (A) un polymère à base de méthacrylate d'alkyle, contenant, comme un composant principal, une unité de (a1) un méthacrylate d'alkyle, dans lequel le groupe alkyle a un nombre de carbone de 2 à 10, et ayant une masse molaire moyenne en masse de 15.000 à 145.000 mesuré par chromatographie d'exclusion stérique, le contenu, dans le polymère à base de méthacrylate d'alkyle (A), de l'unité de (a1) un méthacrylate d'alkyle avec le groupe alkyle ayant un nombre de carbone de 2 à 10 étant 50% en poids ou plus pour 100% en poids de toutes les unités de monomère, comme auxiliaire de traitement pour une résine à base de polyoléfine.

2. Utilisation tel que revendiqué dans la revendication 1, ladite unité de (a1) étant une unité d'un méthacrylate d'alkyle avec le groupe alkyle ayant un nombre de carbone de 4.

3. Utilisation tel que revendiqué dans la revendication 1, ladite unité de (a1) étant un motif de méthacrylate de i-butyle.

4. Utilisation tel que revendiqué dans l'une quelconque des revendications 1 à 3, la masse molaire moyenne en masse du polymère à base de méthacrylate d'alkyle (A) étant de 20.000 à 100.000.

5. Une composition de résine à base de polyoléfine comprenant l'auxiliaire de traitement pour une résine à base de polyoléfine revendiqué dans l'une quelconque des revendications 1 à 4 et (B) une résine à base de polyoléfine.

6. Une composition de résine à base de polyoléfine comprenant l'auxiliaire de traitement pour une résine à base de polyoléfine revendiqué dans l'une quelconque des revendications 1 à 4, (B) une résine à base de polyoléfine et (C) un élastomère thermoplastique.

7. Une composition de résine à base de polyoléfine revendiqué dans la revendication 5 ou 6, la résine à base de polyoléfine étant du polypropylène.

8. Un article moulé obtenable par moulage de la composition de résine à base de polyoléfine revendiqué dans l'une quelconque des revendications 5 à 7.

# Fig.1

EP 2 505 605 B1

# Fig.2

SUFFIX AFTER POINT INDICATES THE KIND
OF PROCESSING AID SHOWN IN TABLE 2

EXCERPT FROM TABLE 2

| | | EXAMPLE 8 | EXAMPLE 9 | EXAMPLE 10 | COMPAR- ATIVE EXAMPLE 10 | COMPAR- ATIVE EXAMPLE 11 | COMPAR- ATIVE EXAMPLE 12 |
|---|---|---|---|---|---|---|---|
| POLYOLEFIN-BASED RESIN (B) [PARTS] | | 100 | 100 | 100 | 100 | 100 | 100 |
| PROCESSING AID | KIND | (1) | (2) | (3) | (8) | (9) | (10) |
| | MASS AVERAGE MOLECULAR WEIGHT | 110000 | 50000 | 30000 | 8000 | 170000 | 2500000 |
| | [PARTS] | 5 | 5 | 5 | 5 | 5 | 5 |
| MELT TENSION [N] | | 0.035 | 0.037 | 0.043 | 0.015 | 0.032 | 0.035 |
| MFR [G/10 min] | | 4.50 | 4.74 | 4.85 | 5.21 | 4.28 | 4.05 |

22

# Fig.3

SUFFIX AFTER POINT INDICATES THE KIND OF PROCESSING AID SHOWN IN TABLE 2

**EP 2 505 605 B1**